(19) Europäisches Patentamt
European Patent Office
Office européen des brevets

(11) Publication number: 0 088 848 B1

(12) **EUROPEAN PATENT SPECIFICATION**

(45) Date of publication of patent specification: 11.01.89

(51) Int. Cl.⁴: B 01 J 13/00, C 01 G 53/04

(21) Application number: 82306533.9

(22) Date of filing: 08.12.82

# (54) Process for the preparation of a stable sol or a dispersible gel.

(30) Priority: 18.12.81 GB 8138251

(43) Date of publication of application: 21.09.83 Bulletin 83/38

(45) Publication of the grant of the patent: 11.01.89 Bulletin 89/02

(84) Designated Contracting States: DE FR IT NL SE

(56) References cited:
US-A-2 602 070
US-A-3 425 666
US-A-3 458 306
US-A-3 826 755

SMELINS HANDBUCH F. ANORG. CHEMIE, Nickel, part B,2nd ed., 19.66, pp. 445-449

**The file contains technical information submitted after the application was filed and not included in this specification**

(73) Proprietor: UNITED KINGDOM ATOMIC ENERGY AUTHORITY
11 Charles II Street
London SW1Y 4QP (GB)

(72) Inventor: Lane, Edward Sydney
50 Queensway
Didcot Oxfordshire (GB)

(74) Representative: Bennett, Clive Stephen
United Kingdom Atomic Energy Authority
Patent Branch 11, Charles II Street
London, SW1Y 4Qp (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 088 848 B1

**Description**

The present invention relates to the preparation of materials and finds application in the preparation of sols and gels.

According to one aspect of the present invention there is provided a process for the preparation of a stable sol or a dispersible gel which comprises contacting a chemical compound with an epoxy compound under conditions such that anions are extracted from the chemical compound, the amount of epoxy compound and the conditions being selected such that a stable sol or a dispersible gel is formed.

According to one embodiment of the present invention there is provided a process for the preparation of a dispersible gel which comprises contacting a chemical compound with an epoxy compound under conditions such that anions are extracted from the chemical compound, the amount of epoxy compound and the conditions being selected such that a dispersible gel is formed.

The term "dispersible gel" as used in the specification means a gel that can be dispersed in a liquid (e.g. aqueous media such as water or dilute acidic solution or an organic medium) to form a sol (i.e. colloidal solution).

According to another embodiment of the present invention there is provided a process for the preparation of a sol which comprises contacting a chemical compound with an epoxy compound under conditions such that anions are extracted from the chemical compound, the amount of epoxy compound and the conditions being selected such that a dispersible gel is formed, and dispersing the dispersible gel in a liquid to form a sol.

The epoxy compound may be any one which has a suitable reaction rate with anions of the chemical compound to effect gel formation. Examples are lower alkylene oxides (such as ethylene oxide, propylene oxide or butylene oxide), glycidol and epichlorohydrin.

Preferably the chemical compound is dissolved in a suitable solvent to form a solution prior to contacting with the epoxy compound. Thus in one embodiment an aqueous solution (e.g. an aqueous metal salt solution) may be contacted with an epoxy compound in accordance with the present invention.

By way of example it may be noted that deanionisation of a metal salt with an epoxy compound proceeds according to a reaction of a type:

$$MX+\underset{\diagdown\,O\,\diagup}{CH_2CH_2}+H_2O \qquad MOH+HOCH_2CH_2X$$

where X is an anion (e.g. a halide or nitrate anion).

When contacting an aqueous solution, such as an aqueous metal salt solution, with an epoxy compound in accordance with the present invention the contacting may optionally be carried out in the presence of a polar organic solvent. The presence of such a polar organic solvent can be used to assist in maintaining the epoxy compound in solution if required.

Examples of suitable polar organic solvents are lower alkanols (e.g. methanol, ethanol and propanol) and dimethylformamide.

It is to be understood that the present invention is not limited to aqueous systems.

Thus the contacting of the chemical compound with the epoxy compound may be effected in a suitable organic liquid (preferably a water miscible organic liquid).

The organic liquid may be chosen such that after formation the dispersible gel is dispersible in an organic medium to form an organosol. The organic medium may be a further organic liquid.

The organic liquid in which the contacting of the chemical compound with the epoxy compound is to be effected should be one which does not react deleteriously with the epoxy compound. Furthermore, the organic liquid should be one in which the chemical compound is sufficiently soluble to enable desired concentrations of chemical compound to be achieved.

An example of an organic liquid suitable for use with a chemical compound comprising a metal salt is ethylene glycol. Although the miscibility of ethylene glycol with certain epoxy compounds (e.g. propylene oxide) is relatively low, satisfactory contacting to form a dispersible gel may be achieved by mechanical mixing.

When preparing, in accordance with the present invention, a dispersible gel for dispersion in an aqueous liquid to form a sol it is preferred to remove any organic reaction products from the gel after formation (e.g. by filtration, washing or evaporation) prior to dispersing the gel in an aqueous liquid to give a sol.

The volatility of organic reaction products tends to vary according to the epoxy compound used. For example, ethylene oxide and propylene oxide give organic reaction products which are more volatile than the organic reaction products obtained using, say, glycidol.

Thus, where organic reaction products are to be removed from the dispersible gel by evaporation it can be advantageous to choose the epoxy compound which gives the more volatile organic reaction products.

Where a solution of the chemical compound is treated in accordance with the present invention to produce a sol the anion/metal ratio in the sol is considerably lower than in the starting solution containing the chemical compound.

Examples of chemical compounds which may be progressively deanionised by treatment with an epoxy compound in accordance with the present invention to prepare dispersible gels and sols are chlorides, bromides, iodides, nitrates, sulphates and acetates.

Certain nitrate ester reaction products formed on treating nitrates with epoxy compounds may be more hazardous (e.g. from the point-of-view of fire or health hazard) than the reaction products formed on treating corresponding halides.

Thus in certain cases it may be advantageous to use a halide rather than a nitrate as the chemical compound.

Sulphates and acetates may tend to give slow reactions and/or reaction products which may be difficult to remove from the gel. Accordingly the suitability of a particular sulphate or acetate for use in accordance with the present invention can depend upon the acceptability of the reaction rate and/or the reaction products in given circumstances.

Examples of metal salts which have been progressively deanionised by treatment with an epoxy compound in accordance with the present invention to prepare dispersible gels and sols are aluminium chlorohydrate (Cl/Al=0.5), basic titanium IV chloride (Cl/Ti=1.5), basic zirconium nitrate ($NO_3$/Zr=1.0), basic zirconium chloride (Cl/Zr=1.1) and nickel chloride (Cl/Ni=2.0).

Where chemically possible it can be advantageous to choose the chemical compound to be an anion-deficient compound.

For example aluminium chlorohydrates (nominally $Al_2(OH)_5Cl$) are generally preferred to hydrated aluminium trichloride because there is less anion (halide) to be removed and hence less epoxy compound required to achieve gelation.

It is to be understood that the present invention is not limited to chemical compounds having a monovalent anion species.

It is to be further understood that the present invention is not limited to the extrusion of anions from one chemical compound at a time. Thus, a mixture of two or more chemical compounds may, if desired, be contacted with an epoxy compound to extract anions in accordance with the present invention. Thus, for example, a gel may be formed which contains a mixture of metal hydrous oxides.

When preparing a dispersible gel for dispersion in water in accordance with the present invention using aluminium chlorohydrate it is preferred to use a sub-stoichiometric amount of epoxy compound since the use of a stoichiometric or super-stoichiometric amount of epoxy compound tends to produce gels which are non-dispersible in water.

What is meant by "sub-stoichiometric amount of epoxy compound" may be illustrated, by way of example, by reference to a system involving a monovalent anion species. Thus, where a monovalent anion species is involved a sub-stoichiometric amount of epoxy compound is one which gives less than one mole of epoxy compound per mole of monovalent anion species.

In accordance with the present invention hydroxide gels may be produced which have small crystallite sizes, for example of a size which results in the gel being optically transparent, and are readily dispersible in dilute acid solutions or with hydrolysable salts to produce sols.

The present invention can be used in the direct preparation of stable sols without first forming a dispersible gel.

Thus, in accordance with a further embodiment of the present invention there is provided a process for the preparation of a stable sol which comprises contacting a chemical compound with an epoxy compound under conditions such that anions are extracted from the chemical compound, the amount of epoxy compound and the conditions being selected such that a stable sol is formed.

By "stable sol" as used in this Specification, it is meant that the sol exhibits stability towards sedimentation at least sufficiently to enable it to be used in further processing (e.g. in forming a coating). In general this will mean that the sol is stable with respect to sedimentation over a period of at least several hours and preferably longer.

The chemical compound may, in accordance with one embodiment of the present invention, be in the form of a sol or anion deficient solution so that after deanionisation in accordance with the present invention there is produced a sol or anion deficient solution in which the anion to cation ratio is lower than the starting sol or anion deficient solution. By way of example, a zirconium nitrate anion deficient solution may be deanionised further in accordance with the present invention to give a colloidal solution having a lower anion/cation ratio.

It will be appreciated that sols and gels in accordance with the present invention may find application in the preparation of ceramic products.

The invention also provides in a further aspect a dispersible gel whenever prepared by a process in accordance with the present invention. Further the invention provides a sol whenever prepared by a process in accordance with the present invention.

British Patent Specification No. 1,045,432 (based on US Application No. 260,964 (21st February 1963)) discloses and claims *inter alia* a process for manufacturing a ferrimagnetic material which includes a step of using an epoxy compound and a step of heating (e.g. to at least 600°C) to give a ferrimagnetic material.

[US Patent No. 3,425,666 is also based on US Application No. 260,964 of 21st February 1973].

US Patent Specification No. 3,458,306 discloses and claims *inter alia* a process for preparing a material comprising a continuous phase selected from metals and metal alloys surrounding a dispersed phase of

refractory metal oxide particles which includes a step of using an epoxy compound and a step of heating (e.g. to a temperature in the range 600° to 1800°F (316 to 982°C)).

A process for producing fine powder of metals and oxides which includes a step of using an epoxy compound and a step of heating is also described by R. H. Lindquist in "Modern Developments in Powder Metallurgy" (Vol. 5) Ed. H. H. Hausner, Plenum Press, NY—London 1971 (pages 289—298).

The present invention will now be further described, by way of example only, as follows, Examples 1, 2, 6, 7, 8, 10, 11 and 12 being in accordance with the present invention and Examples 3, 4 and 9 being Comparative Examples:

Example 1

300 g of commercial zirconium hydroxide was refluxed for 3 hours in water containing 143 mls of concentrated hydrochloric acid. The resulting basic zirconium chloride solution was filtered and analysed as containing approximately 1.9 M Zr with a chloride to zirconium ratio (Cl/Zr) of 1.1.

40 mls of the solution prepared as above were shaken in a stoppered flask with 5 g of propylene oxide. Gelation to a brittle cake occurred after 10 minutes. The cake was broken up and dried in a current of air at room temperature to give a bright, brittle gel product.

Example 2

The bright, brittle gel product prepared in accordance with Example 1 was dispersed by shaking in water to give a sol (colloidal solution) having a Cl/Zr ratio=0.58.

Examples 3 to 7

These Examples illustrate the influence of epoxy compound/chemical compound mole ratio on the water dispersibility of the gel produced.

In each of Examples 3 to 7 50 g of aluminium chlorohydrate solution (8.2% Cl; 23.7% $Al_2O_3$) were used, whilst the amount of propylene oxide was changed to give a different propylene oxide/aluminium chlorohydrate mole ratio in each Example.

In each Example 3 to 7 the aluminium chlorohydrate solution was mixed with 20 ml of industrial methylated spirits, the selected amount of propylene oxide was added and gelation was allowed to proceed in a closed flask.

The gel produced after gelation in each Example 3 to 7 was broken into fragments, washed with methylated spirits and air dried at room temperature. The resulting dried gel was tested for dispersibility in water.

The results are given in Table I.

TABLE I

| Example No. | Aluminium chloro-hydrate | | Propylene oxide | | Mole ratio (propylene oxide/ aluminium chloro-hydrate) | Dispersibility of gel in $H_2O$ |
|---|---|---|---|---|---|---|
| | g | moles | g | moles | | |
| 3 | 50 | 0.116 | 7 | 0.12 | 1.035 | Not dispersible |
| 4 | 50 | 0.116 | 5 | 0.086 | 0.74 | Not dispersible |
| 5 | 50 | 0.116 | 4 | 0.069 | 0.595 | Not dispersible |
| 6 | 50 | 0.116 | 3 | 0.051 | 0.44 | Dispersible |
| 7 | 50 | 0.116 | 1.1 | 0.019 | 0.29 | Dispersible* |

*Reaction incomplete—some $Al^{3+}$ ions in washings.

On consideration of Table I it can be seen that with a propylene oxide/aluminium chlorohydrate ratio above the value of about 0.5, see Examples 3 to 5, gelation is achieved, but the gel produced is not dispersible in water.

(Although not dispersible in cold (room temperature) water, gels produced in accordance with Examples 3 to 5 could be dispersed in dilute aqueous acid solution or by boiling with water).

However, with a mole ratio below 0.5 (Examples 6 and 7) a water dispersible gel is produced. It should be noted, however, that although in the case of Example 7 a dispersible gel was produced the reaction had

not gone to completion since $Al^{3+}$ ions were detectable in the washing. Thus, if it is required to produce a dispersible gel whilst still substantially completing the reaction it is desirable to avoid both super-stoichiometric mole ratios and too low sub-stoichiometric mole ratios.

Example 8

A commercial sample of aqueous titanium tetrachloride solution was evaporated in a stream of air at room temperature to give a more concentrated solution having a Cl/Ti ratio of 1.7 and the concentration of Ti of 0.0034 moles per gm. 20 g of this more concentrated solution were mixed with 100 mls of industrial methylated spirits and 8 ml of glycidol added. The mixture increased in viscosity and set to a gel within 5 minutes. The gel at this point was dispersible in water. The gel was broken up and heated on a steam bath to remove organic liquid and reaction products. The resulting gel product (12 g) was water dispersible.

Example 9

The procedure of Example 8 was repeated, with the exception that 10 ml of glycidol were used. Gelation was almost instantaneous. The gel produced was broken up into small pieces and stirred in 800 ml of water. The volume of the gel layer was approximately 200 ml and no $Ti^{4+}$ was detected in the supernate.

On comparing Examples 8 and 9 it will be seen that glycidol can be used (Example 8) to produce solid gels (which are not hydroxides *per se*) which are dispersible in water but that increasing the glycidol concentration gives a water insoluble hydroxide gel.

Example 10

Nickel chloride, $NiCl_2$ $6H_2O$ (5 g) was dissolved in methanol (8 ml) in a closed container. Propylene oxide (2.35 g) was introduced and the resulting mixture allowed to stand at room temperature. Within 3 hours the mixture set to a firm green gel. This gel was dispersible in water to give a stable sol. It was also dispersible in ethylene glycol monoethyl ether ("Cellosolve") to give a transparent green organosol.

Example 11

A commercially available titanic chloride solution (50 ml) (2.7 M Ti; 11 M $Cl^-$) was evaporated in a stream of air at room temperature (~20°C) to give a pale cream coloured solid.

Water was added to the solid and the volume made up to 50 ml with water to give a second solution (2.7 M Ti; 1.5 M $Cl^-$).

A portion of this second solution (10 ml) (2.7 M Ti; 1.5 M $Cl^-$) was stirred with glycidol (3 g) and a gel formed within 5 minutes at room temperature. The resulting gel was redispersible in acidified water to give a sol.

Example 12

A portion of the second solution prepared in accordance with Example 11 (10 ml) (2.7 M Ti; 1.5 M $Cl^-$) was stirred with glycidol (2 g) and the resulting reaction mixture allowed to stand overnight at room temperature.

The reaction mixture had increased in viscosity to give a sol, but did not gel. The sol could be diluted with water without precipitation occurring.

**Claims**

1. A process for the preparation of a stable sol or a dispersible gel characterised in that a chemical compound is contacted with an epoxy compound under conditions such that anions are extracted from the chemical compound, the amount of epoxy compound and the conditions being selected such that a stable sol or a dispersible gel is formed.

2. A process as claimed in Claim 1 for the preparation of a dispersible gel further characterised in that a chemical compound is contacted with an epoxy compound under conditions such that anions are extracted from the chemical compound, the amount of epoxy compound and the conditions being selected such that a dispersible gel is formed.

3. A process as claimed in claim 1 for the preparation of a sol further characterised in that a chemical compound is contacted with an epoxy compound under conditions such that anions are extracted from the chemical compound, the amount of epoxy compound and the conditions being selected such that a dispersible gel is formed and the dispersible gel is dispersed in a lqiuid to form a sol.

4. A process as claimed in any one of the preceding claims, wherein the epoxy compound is a lower alkylene oxide, glycidol or epichlorohydrin.

5. A process as claimed in any one of the preceding claims, wherein an aqueous solution of the chemical compound is contacted with an epoxy compound.

6. A process as claimed in Claim 5, wherein the chemical compound is a metal salt.

7. A process as claimed in Claim 5 or Claim 6, wherein an aqueous solution is contacted with an epoxy compound in the presence of a polar organic solvent.

8. A process as claimed in any one of Claims 1 to 4, wherein the contacting of the chemical compound and the epoxy compound is effected in an organic liquid.

9. A process as claimed in Claim 1 for the preparation of a stable sol which comprises contacting a chemical compound with an epoxy compound under conditions such that anions are extracted from the chemical compound, the amount of epoxy compound and the conditions being selected such that a stable sol is formed.

10. A stable sol or a dispersible gel whenever prepared by a process as claimed in Claim 1.

**Patentansprüche**

1. Verfahren zur Herstellung eines stabilen Sols oder eines dispersiblen Gels, dadurch gekennzeichnet, daß man eine chemische Verbindung mit einer Epoxyverbindung unter Bedingungen in Kontakt bringt, daß die Anionen aus der chemischen Verbindung extrahiert werden, wobei die Menge der Epoxyverbindung und die Bedingungen so gewählt werden, daß ein stabiles Sol oder dispersibles Gel gebildet wird.

2. Verfahren nach Anspruch 1 zur Herstellung eines dispersiblen Gels, weiterhin gekennzeichnet dadurch, daß man eine chemische Verbindung mit einer Epoxyverbindung unter derartigen Bedingungen in Kontakt bringt, daß die Anionen aus der chemischen Verbindung extrahiert werden, wobei die Menge der Epoxyverbindung und die Bedingungen so gewählt werden, daß ein dispersibles Gel gebildet wird.

3. Verfahren nach Anspruch 1 zur Herstellung eines Sols, weiterhin gekennzeichnet dadurch, daß man eine chemische Verbindung mit einer Epoxyverbindung unter Bedingungen in Kontakt bringt, daß Anionen aus der chemischen Verbindung extrahiert werden, wobei die Menge der Epoxyverbindung und die Bedingungen so gewählt werden, daß ein dispersibles Gel gebildet wird und das dispersible Gel in einer Flüssigkeit zur Bildung eines Sols dispergiert wird.

4. Verfahren nach einem der vorhergehenden Ansprüche, worin die Epoxyverbindung ein Niedrig-Alkylenoxid, Glycidol oder Epichlorhydrin ist.

5. Verfahren nach einem der vorhergehenden Ansprüche, worin eine wässrige Lösung der chemischen Verbindung mit einer Epoxyverbindung in Kontakt gebracht wird.

6. Verfahren nach Anspruch 5, worin die chemische Verbindung ein Metallsalz ist.

7. Verfahren nach Anspruch 5 oder 6, worin eine wässrige Lösung mit einer Epoxyverbindung in Gegenwart eines polaren organischen Lösungsmittels in Kontakt gebracht wird.

8. Verfahren nach einem der Ansprüche 1 bis 4, worin das in Kontakt bringen der chemischen Verbindung und der Epoxyverbindung in einer organischen Flüssigkeit durchgeführt wird.

9. Verfahren nach Anspruch 1 zur Herstellung eines stabilen Sols, bei dem man eine chemische Verbindung mit einer Epoxyverbindung unter Bedingungen in Kontakt bringt, daß Anionen aus der chemischen Verbindung extrahiert werden, wobei die Menge der Epoxyverbindung und der Bedingungen so ausgewählt werden, daß ein stabiles Sol gebildet wird.

10. Stabiles Sol oder dispersibles Gel, hergestellt nach einem Verfahren nach Anspruch 1.

**Revendications**

1. Procédé de préparation d'un sol stable ou d'un gel dispersable, caractérisé en ce qu'un composé chimique est mis au contact d'un composé époxyde dans des conditions telles que des anions sont extraits du composé chimique, la quantité de composé époxyde et les conditions étant choisies de manière qu'un sol stable ou un gel dispersable de forme.

2. Procédé selon la revendication 1, destiné à la préparation d'un gel dispersable, caractérisé en outre en ce qu'un composé chimique est mis au contact d'un composé époxyde dans des conditions telles que des anions sont extraits du composé chimique, la quantité du composé époxyde et les conditions étant choisies de manière qu'un gel dispersable se forme.

3. Procédé selon la revendication 1, destiné à la préparation d'un sol, caractérisé en outre en ce qu'un composé chimique est mis au contact d'un composé époxyde dans des conditions telles que des anions sont extraits du composé chimique, la quantité du composé époxyde et les conditions étant choisies de manière qu'un gel dispersable se forme, et le gel dispersable est dispersé dans un liquide afin qu'il forme un sol.

4. Procédé selon l'une quelconque des revendications précédentes, dans lequel le composé époxyde est un oxyde l'alkylène inférieur, le glycidol ou l'épichorhydrine.

5. Procédé selon l'une quelconque des revendications précédentes, dans lequel une solution aqueuse du composé chimique est mise au contact d'un composé époxyde.

6. Procédé selon la revendication 5, dans lequel le composé chimique est un sel métallique.

7. Procédé selon l'une des revendications 5 et 6, dans lequel une solution aqueuse est mise au contact d'un composé époxyde en présence d'un solvant organique polaire.

8. Procédé selon l'une quelconque des revendications 1 à 4, dans lequel la mise en contact du composé chimique et du composé époxyde est réalisée dans un liquide organique.

9. Procédé selon la revendication 1, destiné à la préparation d'un sol stable, qui comprend la mise en contact d'un composé chimique avec un composé époxyde dans des conditions telles que des anions sont extraits du composé chimique, la quantité de composé époxyde et les conditions étant choisies de manière qu'un sol stable se forme.

10. Sol stable ou gel dispersable, préparé par un procédé selon la revendication 1.